(19) Europäisches Patentamt
European Patent Office
Office européen des brevets

(11) **EP 0 834 860 B1**

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(51) Int Cl.[7]: **G10L 15/04**, G10L 15/14

(21) Anmeldenummer: **97113606.4**

(22) Anmeldetag: **06.08.1997**

(54) **Verfahren zur Spracherkennung mit kontexabhängig modellierten Hidden Markov Modellen**

Speech recognition method with context dependent hidden Markov models

Procédé de reconnaissance de la parole avec des modèles de Markov cachés dépendant du contexte

(84) Benannte Vertragsstaaten:
**DE FR GB SE**

(30) Priorität: **27.08.1996 DE 19634620**

(43) Veröffentlichungstag der Anmeldung:
**08.04.1998 Patentblatt 1998/15**

(73) Patentinhaber: **SIEMENS AKTIENGESELLSCHAFT**
**80333 München (DE)**

(72) Erfinder:
• **Hauenstein, Alfred, Dr.-Ing.**
**80939 München (DE)**
• **Marschall, Erwin, Dr.rer.nat**
**82467 Garmisch-Partenkirchen (DE)**

(56) Entgegenhaltungen:
• **M.Y.HWANG ET AL: "Modeling Between-Word Coarticulation in Continuous Speech Recognition " EUROSPEECH 89-EUROPEAN CONFERENCE ON SPEECH COMMUNICATION AND TECHNOLOGY., Bd. One, September 1989, PARIS, Seiten 5-8, XP000209266**
• **E.P.CIACHIN ET AL.: "Word juncture modeling using phonological rules for HMM-based continuous speech recognition." COMPUTER SPEECH AND LANGUAGE., Bd. 5, Nr. 2, April 1991, LONDON GB, Seiten 155-168, XP000202891**
• **C.H.LEE ET AL.: "Improved acoustic modeling for large vocabulary continuous speech recognition." COMPUTER SPEECH AND LANGUAGE., Bd. 6, Nr. 2, April 1992, LONDON GB, Seiten 103-127, XP000266325**

## Beschreibung

Die Erfindung bezieht sich auf ein Spracherkennungsverfahren unter Verwendung statistischer Methoden, insbesondere mit Hidden Markov Modellen, welche Sprachlaute kontextabhängig modellieren.

Der Mustererkennung kommt wegen der steigenden Automatisierung in technischen Systemen vermehrt Bedeutung zu. Häufig sind die Muster in Meßsignalen enthalten, welche auf die eine oder andere Weise aus Prozessen gewonnen werden, die untersucht werden sollen. Als Beispiele seien hier die Analyse der natürlichen Sprache zu nennen. Als besonders geeignet für die automatische Analyse von Meßsignalen, haben sich die Hidden Markov Modelle [1] erwiesen.

Weitere Möglichkeiten zur Modellbildung bestehen in verschiedenen Verfahren zur Modellierung von Lauten und Worten mit Hilfe von Hidden Markov Modellen, welche aus dem Stand der Technik bekannt sind. Beispielsweise werden Wörter als Abfolge von verbundenen Zuständen eines Hidden Markov Modells modelliert. Diese Zustände repräsentieren sogenannte Laute bzw. Wortuntereinheiten. Ein Laut kann dabei aus mehreren Zuständen oder auch nur einem einzigen Zustand bestehen. Bei der Spracherkennung und der Worterkennung werden beispielsweise für die einzelnen modellierten Laute in getrennten Bearbeitungsschritten, welche beispielsweise als Merkmalsextraktion und Abstandsberechnung beschrieben sind, die Lautwahrscheinlichkeiten $P_{Lj}$ errechnet. Dabei gilt diejenige Wortfolge als erkannt, deren Laute die höchste Abfolgewahrscheinlichkeit $P_{max}$ besitzt.

$$P_{max} = \{P(L_1,...,L_w)\} = \max \{\Pi_i P_{Li}\} \qquad (1)$$

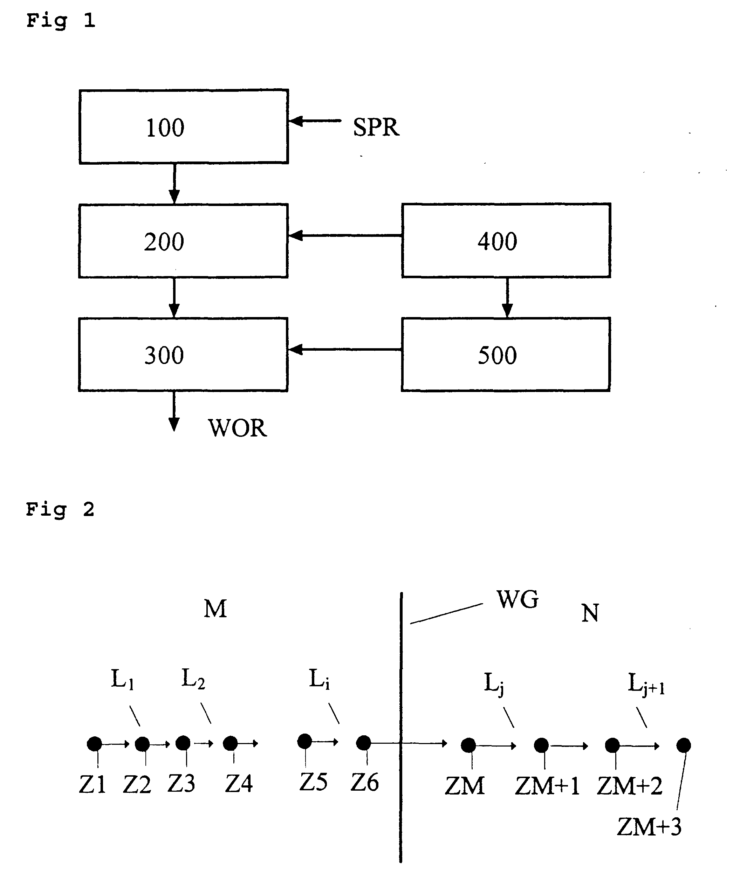

Bei der ersten Lösung zur Modellierung von Worten durch Hidden Markov Modelle handelt es sich um eine sogenannte kontextunabhängige Modellierungsmethode, welche auch in Figur 2 dargestellt ist. Hierbei werden Worte als Abfolge von verbundenen Zuständen eines Hidden Markov Modelles modelliert. Die dabei auftretenden Laute L1, L2, ..., Lj werden als unabhängige Abfolge von Zuständen dargestellt. Insbesondere werden dabei keinerlei Abhängigkeiten über die Wortgrenzen hinweg berücksichtigt. Solche Verfahren aus dem Stand der Technik haben den Vorteil, daß sie relativ einfach auf Rechnern zu implementieren sind, da keine Abhängigkeiten von nachfolgenden oder vorhergehenden Worten beim Programmieren und Auswerten berücksichtigt werden müssen. Dabei tritt allerdings der Nachteil auf, daß der Sprache inhärente Abhängigkeiten wie z. B. sogenannte Koartikulationen von Lauten schlecht modelliert werden können und das möglichen Sprechpausen zwischen Worten keine Rechnung getragen wird, was zu einer relativ niedrigen Erkennungsrate bei solchen Modellierungsverfahren für Sprache führt.

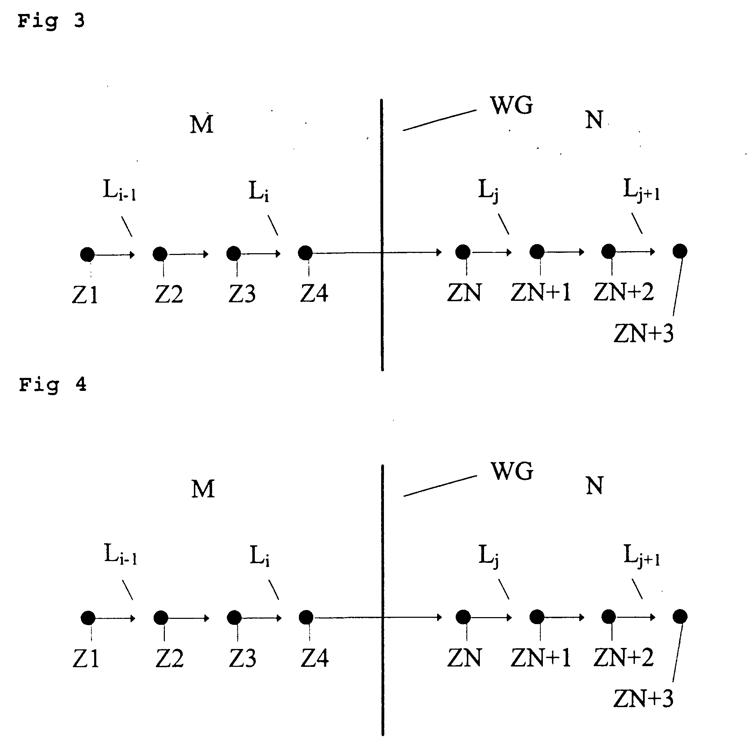

Bei der zweiten bekannten Lösung zur Modellierung von Worten für die Spracherkennung mit Hilfe von Hidden Markov Modellen handelt es sich um eine Form der kontextabhängigen Modellierung. Dabei wird der Kontext zwischen den einzelnen modellierten Lauten auch über Wortgrenzen hinweg berücksichtigt, wie dies auch in Figur 3 dargestellt ist. Ebenfalls werden dabei die Worte als Abfolge der obengenannten Laute modelliert. Die einzelnen Laute werden jedoch in Abhängigkeit eines linksseitigen Kontexts der Länge k und eines rechtsseitigen Kontexts der Länge I modelliert. In Figur 3 ist dies beispielhaft für die Laute $L_{i-1}$, $L_i$, $L_j$ dargestellt. Der Laut $L_i$ wird dabei folgendermaßen in Kontextform annotiert:

$$L(i-k, i-k+1,..., i-1,j,j+1,...,j+l-1).$$

Der Vorteil dieser Lösungsvariante besteht in der genauen Modellierung von Kontexten wie beispielsweise der Koartikulation. Aber auch bei dieser Methode aus dem Stand der Technik treten verschiedene Nachteile auf. Zum einen kann dabei nicht berücksichtigt werden, daß über Wortgrenzen hinweg andere Koartikulationseffekte auftreten als innerhalb von Worten. Oftmals unterscheiden sich diese Koartikulationseffekte in Form von kurzen Pausen, Luftholgeräuschen, oder Ähnlichem, welches zwischen den Worten auftritt. Des weiteren wird der Berechnungsaufwand für diese Lösungsvariante sehr groß, da Wortübergänge nicht im Voraus bekannt sind und daher für den Laut $L_i$ die Lautwahrscheinlichkeiten $P_{Lj}$ in Abhängigkeit der Laute aller möglichen Nachfolgeworte errechnet werden muß. Ebenfalls muß die Lautfolgewahrscheinlichkeit aller möglichen Lautkombinationen errechnet werden.

Aus Mei-Yuh Hwang et al.: "Modeling Between-Word Coarticulation in Continuous Speech Recognition", Eurospeech 89, Sept. 1989, Paris, Seiten 5-8, ist ein Verfahren bekannt, bei dem Worte bildende Laute kontextabhängig durch Hidden Markov Modelle modelliert werden und bei dem am Wortanfang bzw. am Wortende befindliche Laute durch einen Lautkontext für den Wortanfang bzw. für das Wortende ergänzt werden. Hierbei ergibt sich jedoch eine große Anzahl von Triphonen, die sich aufgrund des regelmäßig begrenzten Trainingsmaterials nur unzureichend trainieren lassen und in der Erkennungsphase zu langen Suchprozessen führen.

Die der Erfindung zugrundeliegende Aufgabe, besteht also darin, ein Verfahren zur Spracherkennung mit kontextabhängig modellierten Hidden Markov Modellen anzugeben, mit dem gesprochene Worte in einem Sprachsignal besser erkannt werden können.

Diese Aufgabe wird gemäß den Merkmalen des Patentanspruches 1 gelöst.

Weiterbildungen der Erfindung ergeben sich aus den Unteransprüchen.

Ein besonderer Vorteil des erfindungsgemäßen Verfahrens besteht darin, daß sich mit Hilfe von speziellen Lautkontexten für das Wortende und den Wortanfang einzelne Worte im Sprachfluß bzw. in dem aus dem Sprachfluß abgeleiteten Sprachsignal genauer lokalisieren lassen können. Damit kann bei der Spracherkennung eine höhere Erkennungsrate von einzelnen Worten erzielt werden. Je nach Abhängigkeit der zwischen den einzelnen Worten auftretenden Sprachbesonderheiten in Form von Koartikulation oder Sprachpausen können für diese am Wortende und am Wortanfang speziell vorgesehene Lautkontexte mehrere Hidden Markov Modelle gebildet werden.

Besonders vorteilhaft werden dabei sowohl Lautkontexte für den Wortanfang als auch für das Wortende eingeführt, da damit die Wahrscheinlichkeit der Erkennung eines Wortes gegenüber lediglich einem Lautkontext erhöht wird.

Besonders vorteilhaft werden diese am Wortanfang bzw. am Wortende vorgesehenen Lautkontexte mit einer speziellen Kennung in Form einer Kontextgrenze versehen, damit bei der anschließenden Sprachauswertung des Sprachsignales eine Wortgrenze noch besser definiert gefunden werden kann. Durch diese erfindungsgemäße Vorgehensweise wird die Lokalisierung einzelner Worte im Sprachfluß bzw. die Unterscheidung unterschiedlicher zusammen gesprochener Worte entscheidend verbessert.

Besonders vorteilhaft werden in diesen Lautkontexten am Wortanfang bzw. am Wortende Sprachmerkmale modelliert, welche für den Übergang zwischen zwei Worten, d. h. die Koartikulation zwischen den Worten, oder besondere Spracheigenschaften des Sprechers zwischen zwei Worten, charakteristisch sind. Auf diese Weise lassen sich diese zwischen den Worten gebildeten Lautkontexte von solchen Lautkontexten unterscheiden, welche innerhalb eines Wortes für die Modellierung herangezogen werden, was wiederum zu einer erhöhten Erkennungsrate bei der Spracherkennung führt.

Im folgenden wird die Erfindung anhand von Figuren weiter erläutert.

Figur 1 erläutert die allgemeinen Zusammenhänge bei der akustischen Modellbildung.
Figur 2 zeigt ein Beispiel der kontextfreien Modellierung von zwei Worten M und N aus dem Stand der Technik.
Figur 3 zeigt ein Beispiel der Kontextmodellierung von zwei Worten M und N aus dem Stand der Technik.
Figur 4 zeigt ein Beispiel der erfindungsgemäßen Kontextmodellierung von zwei Worten M und N.

In Figur 1 sind, um die Erfindung einordnen zu können, die allgemeinen Zusammenhänge bei der Spracherkennung in Blockform dargestellt. Aus dem Sprachsignal SPR werden in einer Merkmalsextraktionsstufe 100 beispielsweise Merkmalsvektoren gebildet, welche in einer Klassifikatonsstufe 200 mit akustischen Modellen aus einer Modellbibliothek 400 verglichen werden. im Anschluß erfolgt beispielsweise anhand eines Sprachmodelles 500 in einem Suchprozeß 300 durch Berechnung verschiedener Lautabfolgewahrscheinlichkeiten die Zuordnung zu Worten und die Erstellung einer Wortfolge WOR.

Die Erfindung bezieht sich in diesem Zusammenhang auf Erstellung der Laut- oder Wortuntereinheit-Modelle in der Modellbibliothek 400. Durch die erfindungsgemäße Vorgehensweise, ergeben sich Verbesserungen bei der Klassifikation 200 in Form einer höheren Erkennungsrate und beim Suchprozeß 300 in Form eines verringerten Rechenaufwandes.

In Figur 2 ist die kontextfreie Modellierung von zwei Worten M und N über Hidden Markov Modelle, welche aus dem Stand der Technik bekannt ist, dargestellt. Das Wort M besteht dabei aus einzelnen Lauten $L_1$, $L_2$ bis $L_i$, welche durch Zustände Z1 bis Z6 gekennzeichnet sind. Im Zusammenhang mit der Beschreibung der Erfindung ist zu beachten, daß immer an jenen Textstellen, wo der Begriff "Laut" gebraucht wird auch der Begriff "Wortuntereinheit" verwendet werden kann. Dies bedeutet, daß sich beispielsweise Laute im Zusammenhang mit der Erfindung in speziellen Fällen auf Wortuntereinheiten von Worten beziehen. Die Übergänge zwischen den einzelnen Zuständen sind durch Pfeile markiert. Weitere Übergänge, wie sie beispielsweise durch das Auslassen von Zuständen entstehen sind möglich, verändern aber nicht den Charakter der Erfindung. Das Wort N besteht dabei beispielsweise aus Lauten $L_j$ und $L_{j+1}$. Der Laut $L_j$ wird dabei durch die zwei Zustände ZM und ZM+1 charakterisiert, während der Laut $L_{j+1}$ durch die beiden Zustände ZM+2 und ZM+3 charakterisiert ist. Bei der Spracherkennung dieser beiden Worte M und N muß über die Wortgrenze WG hinweg der Zustandsübergang des Zustandes Z6 vom Wort M aus dem Laut $L_i$ zum Zustand ZM aus dem Wort N des Lautes $L_j$ untersucht werden. Diese Art der Implementierung und Modellierung von Worten durch Laute und einzelne Hidden Markov Modelle dieser Laute ist zwar einfach, aber wie aus dem Beispiel erkannt werden kann treten insbesondere beim Übergang von einzelnen Worten im Bereich der Anfangs- und der Endlaute Probleme beim Separieren der Wortgrenzen auf. Dies führt bei dieser Art der Spracherkennung zu schlechten Erkennungsraten für einzelne Worte.

Figur 3 zeigt ein Beispiel der kontextabhängigen Modellierung von Lauten einzelner Worte hier Wort M und Wort N mit Hilfe von Hidden Markov Modellen. In diesem Beispiel sind von dem Wort M zwei Laute $L_{i-1}$ und $L_i$ angegeben. Der Laut $L_{i-1}$ ist durch die Zustände Z1 und Z2 dargestellt, während der Laut $L_i$ durch die Zustände von Z3 und Z4 charakterisiert wird. Entsprechend der Komplexität der Lautmodellierung können beliebig viele Vorgänger- und Nachfolger- Zustände je Wortuntereinheit zur Beschreibung des entsprechenden Lautkontextes vorgesehen sein. Kontextabhängige Modellierung bedeutet in diesem Zusammenhang, daß die jeweiligen Laute des einzelnen Wortes insbesondere in Abhängigkeit eines linksseitigen Kontexts der Länge k und eines rechtsseitigen Kontexts der Länge 1 modelliert werden. Die Länge der Kontexte 1 bzw. k kann wiederum lautabhängig sein, so daß also verschiedene Kontextlängen für verschiedene Laute verwendet werden können. Die einzelnen Laute $L_{i-1}$, $L_i$, $L_j$ und $L_{j+1}$ werden dabei wie folgt in Kontextform annotiert:

$$L_{i-1}(i-k-1,...,i-2,i,j,j+1,...,j+l-2)$$
$$L_i(i-k,i-k+1,...,i-1,j,j+1,...,j+l-1)$$
$$L_j(i-k+1, i-k+2,...,i,j+1,j+2,...,j+l)$$
$$L_{j+1}(i-k+2,i-k+3,...i+1,j+2,...,j+L,j+l+1)$$

Das Wort N wird dabei durch die Laute $L_j$ und $L_{j+1}$ beschrieben, während diese die Zustandsübergänge von ZN bis ZN+3 aufweisen. Die Kontextmodellierung berücksichtigt dabei die unterschiedlichen Lautumbildungen bei Übergangen der einzelnen Laute des jeweiligen Wortes. Beispielsweise werden dabei Umlaute, Zischlaute oder Doppelvokalübergänge umfaßt. Diese Methode der Modellierung führt zur genaueren Modellierung des Wortes, da die Koartikulation, wie zuvor beschrieben wurde berücksichtigt wird und damit ist eine leichtere Erkennung der jeweiligen Lautfolge eines Wortes gegeben. Der Nachteil dieser Lösung aus dem Stand der Technik besteht jedoch darin, daß über die Wortgrenzen hinweg auftretende Koartikulationseffekte, welche sich von den Koartikulationseffekten die innerhalb von Worten auftreten unterscheiden, nicht berücksichtigbar sind. Ein solcher Lautübergang wäre beispielsweise in Figur 3 der Übergang von Laut $L_i$ und Zustand Z4 zu Wort N und Laut $L_j$ und Zustand ZN. Ein solcher Lautübergang kann beispielsweise im Zusammenhang mit einer Kontextmodellierung besonders kenntlich gemacht werden, indem die Modelle für $L_i$ und $L_j$ mit den erfindungsgemäß vorgesehenen Lautmodellen für Kontexte am Wortende und Wortanfang versehen werden. Dabei kann insbesondere berücksichtigt werden, daß zwischen den Worte M und N Pausen auftreten oder Geräusche wie Luftholen, Hintergrundstörungen, Verzerrungen des Übertragungskanals usw. stattfinden können. Weiterhin ist es durchaus möglich das Hintergrundgeräusche hörbar werden, mit welchen die einzelnen Worte besser separierbar sind. Diese Hintergrundgeräusche können dabei auch in den entsprechenden Lautmodellen berücksichtigt werden. Die vorliegende Erfindung soll insbesondere dazu führen, daß die Wortgrenzen einzelner Worte besser unterscheidbar sind. Bei dem beschriebenen Verfahren der Kontextmodellierung in Figur 3 besteht ein Nachteil darin, daß der Berechnungsaufwand für die Worterkennung sehr groß ist, da die Wortübergänge nicht im voraus bekannt sind und daher für den Laut $L_i$ die Lautwahrscheinlichkeiten $P_{Lj}$ in Abhängigkeit der Laute aller anderen möglichen Nachfolgewörter errechnet werden müssen. Zusätzlich muß die Lautabfolgewahrscheinlichkeit aller Lautkombinationen gemäß Gleichung 1 in der sogenannten Suche berechnet werden.
Figur 4 zeigt ein Beispiel wie nach dem erfindungsgemäßen Verfahren die Worterkennung der Worte M und N durch zusätzliche Lautkontexte am Wortende und am Wortanfang verbessert werden kann. Für das Wort M gelten ebenfalls wieder die Zustandsübergänge von Z1 nach Z4 für die Lautübergänge $L_{i-1}$ und $L_i$. Gemäß der Erfindung werden jedoch die Hidden Markov Modelle für diese Laute durch spezielle Kontext-Modelle für den Wortanfang $W_a$ und für das Wortende $W_e$ ergänzt. Dies gilt ebenfalls für die Laute $L_j$ und $L_{j+1}$, sowie die Zustandsübergänge ZN bis ZN+3 des Wortes N. Damit lassen sich gemäß der Erfindung die einzelnen Laute in Kontextannotation wie folgt darstellen:

$$L_{i-1}(i-k-1,i-k,...,i-2,l,W_e)$$
$$L_i(i-k,i-k+1...,i-1,W_e)$$
$$L_j(W_a,j+1,j+2,...,j+l)$$
$$L_{j+1}(W_a,j,j+2,...,j+l+1)$$

An diesem Beispiel kann erkannt werden, daß gemäß der besonderen Formen des Lautüberganges am Wortanfang und am Wortende des Wortes M und N auch mehrere Laute von der erfindungsgemäßen Ergänzung der Lautkontexte bei der Modellierung mit Hilfe von Hidden Markov Modellen betroffen sein können. In diesem Fall sind es alle in Figur 4 dargestellten Laute. Insbesondere wird bei der erfindungsgemäßen Vorgehensweise das Erkennen der einzelnen Worte, hier das Wort M und das Wort N, über die Wortgrenze hinweg erleichtert, indem beispielsweise speziell Separatoren in Form dieser Lautkontexte für Wortanfang und Wortende $W_a$ und $W_e$ zur Verfügung gestellt werden. Damit wird es bei der Spracherkennung erheblich einfacher den Zustandsübergang Z4 nach ZN als einen Übergang zwischen zwei Worten zu charakterisieren und damit zwei separate Worte in dem Signalfluß des Sprachsignales zu erkennen. Die erfindungsgemäße Methode läßt sich besonders einfach mit der Methode der Kontextmodellierungen für Lautübergänge innerhalb des Wortes kombinieren, wie sie beispielsweise in Figur 3 beschrieben wurde. Innerhalb von Worten wird beispielsweise vom Instrument der Laut-Kontext-Modellierung Gebrauch gemacht, um die Koartikulation beispielsweise beim Laut $L_{i-1}$ zu modellieren. Die erfindungsgemäßen Kontexte $W_a$ und $W_e$ modellieren dabei die Besonderheiten von Wortanfängen- und -enden und setzen vorzugsweise Kontextgrenzen. Gegenüber dem Stand der Technik hat die Anwendung des erfindungsgemäßen Verfahrens erstens den Vorteil, daß die Kontextmodellierung aus dem Stand der Technik wie in Figur 3 beschrieben verwendbar ist und das mit Hilfe des erfindungsgemäßen Verfahrens dabei jedoch wesentlich höhere Erkennungsraten erzielt werden. Zum zweiten werden die neuen differenzierten Lautkontexte $W_a$ und $W_e$ eingeführt, welche das Geschehen an den Wortenden genauer modellierbar machen. Auf diese Weise wird die Erkennungsrate insbesondere durch eine bessere Separierung einzelner Worte aus dem Sprachfluß erhöht. Ein besonders großer dritter Vorteil besteht darin, daß durch die Einführung der Kontextgrenze am Wortende bzw. Wortanfang die Berechnung aller möglichen Lautwahrscheinlichkeiten $P_{Lj}$, sogenannter Emissionswahrscheinlichkeitsberechnung oder Klassifikation, und Lautabfolgewahrscheinlichkeiten über Wortgrenzen hinweg vermieden werden kann, weil sie auf die Lautwahrscheinlichkeiten für die Wortende- bzw. Wortanfangsmodelle bzw. die Lautabfolgewahrscheinlichkeiten bis Wortende bzw. seit Wortanfang reduziert wird.

Literatur:

[1] L.R. Rabiner, "A Tutorial on Hidden Markov Models and selected Applications in Speech Recognition"; Proc. IEEE; Feb. 1989, S. 257-286

**Patentansprüche**

1. Verfahren zur Spracherkennung mit kontextabhängig modellierten Hidden Markov Modellen,

   a) bei dem Worte bildende Laute kontextabhängig durch Hidden Markov Modelle modelliert werden,
   b) bei dem mindestens ein erster sich an einem Wortanfang befindender Laut unabhängig vom Kontext vor dem Wortanfang modelliert wird,
   c) bei dem der Laut durch einen Lautkontext für den Wortanfang ergänzt und damit modelliert wird und dadurch bei der Spracherkennung der Wortanfang des Wortes erkannt wird,
   d) wobei der Lautkontext für den Wortanfang die beim Sprechen des Wortes auftretenden Besonderheiten in der Koartikulation beim Übergang von einem Wort zu einem anderen Wort wiedergibt.

2. Verfahren zur Spracherkennung mit kontextabhängig modellierten Hidden Markov Modellen,

   a) bei dem Worte bildende Laute kontextabhängig durch Hidden Markov Modelle modelliert werden,
   b) bei dem mindestens ein erster sich an einem Wortende befindender Laut unabhängig vom Kontext nach dem Wortende modelliert wird,
   c) bei dem der Laut durch einen Lautkontext für das Wortende ergänzt und damit modelliert wird und dadurch bei der Spracherkennung der Wortende des Wortes erkannt wird,
   d) wobei der Lautkontext für das Wortende die beim Sprechen des Wortes auftretenden Besonderheiten in der Koartikulation beim Übergang von einem Wort zu einem anderen Wort wiedergibt.

3. Verfahren nach Anspruch 1 und 2.

4. Verfahren nach einem der Ansprüche 1 bis 3, bei dem mindestens einer der Lautkontexte für Wortanfang oder Wortende eine Kennung als Kontextgrenze erhält, welche bei der Spracherkennung ausgewertet wird.

**Claims**

1. Speech recognition method with context-dependently modelled Hidden Markov Models,

   a) in which sounds forming words are modelled by Hidden Markov Models depending on context,
   b) in which at least one first sound located at the start of a word is modelled independently of the context before the start of the word,
   c) in which the sound is supplemented by a sound context for the start of the word and modelled thereby, and the start of the word is thereby detected during speech recognition,
   d) the sound context for the start of the word reproducing the special features, occurring during speaking of the word, in the coarticulation upon transition from one word to another word.

2. Speech recognition method with context-dependently modelled Hidden Markov Models,

   a) in which sounds forming words are modelled by Hidden Markov Models depending on context,
   b) in which at least one first sound located at the end of a word is modelled independently of the context after the end of the word,
   c) in which the sound is supplemented by a sound context for the end of the word and modelled thereby, and the end of the word is thereby detected during speech recognition,
   d) the sound context for the end of the word reproducing the special features, occurring during speaking of the word, in the coarticulation upon transition from one word to another word.

3. Method according to Claims 1 and 2.

4. Method according to one of Claims 1 to 3, in which at least one of the sound contexts for the start of the word or end of the word receives an identifier as context limit which is evaluated during' speech recognition.

**Revendications**

1. Procédé pour la reconnaissance de la parole avec des modèles de Markov cachés modélisés en fonction du contexte,

   a) dans lequel on modélise des sons formant des mots en fonction du contexte par des modèles de Markov cachés,
   b) dans lequel on modélise au moins un premier son se trouvant en début de mot indépendamment du contexte avant le début de mot,
   c) dans lequel on complète le son par un contexte de son pour le début de mot, on le modélise ainsi et on reconnaît ainsi le début du mot lors de la reconnaissance de la parole,
   d) dans lequel le contexte de son pour le début de mot reproduit les particularités, apparaissant lors de l'énoncé du mot, dans la coarticulation lors de la transition d'un mot à un autre mot.

2. Procédé pour la reconnaissance de la parole avec des modèles de Markov cachés modélisés en fonction du contexte,

   a) dans lequel on modélise des sons formant des mots en fonction du contexte par des modèles de Markov cachés,
   b) dans lequel on modélise au moins un premier son se trouvant en fin de mot indépendamment du contexte après la fin de mot,
   c) dans lequel on complète le son par un contexte de son pour la fin de mot, on le modélise ainsi et on reconnaît ainsi la fin du mot lors de la reconnaissance de la parole,
   d) dans lequel le contexte de son pour la fin de mot reproduit les particularités, apparaissant lors de l'énoncé du mot, dans la coarticulation lors de la transition d'un mot à un autre mot.

3. Procédé selon les revendications 1 et 2.

4. Procédé selon l'une des revendications 1 à 3, dans lequel au moins l'un des contextes de sons pour le début de mot ou pour la fin de mot reçoit un identificateur comme limite de contexte qui est évalué lors de la reconnaissance de la parole.

Fig 1

Fig 2

Fig 3

M   WG   N

$L_{i-1}$   $L_i$   $L_j$   $L_{j+1}$

Z1   Z2   Z3   Z4   ZN   ZN+1   ZN+2   ZN+3

Fig 4

M   WG   N

$L_{i-1}$   $L_i$   $L_j$   $L_{j+1}$

Z1   Z2   Z3   Z4   ZN   ZN+1   ZN+2   ZN+3